# EUROPEAN PATENT SPECIFICATION

(11) **EP 1 017 621 B1**
(45) Date of publication and mention of the grant of the patent: **30.07.2003**
(21) Application number: 98922472.0
(22) Date of filing: 21.05.1998
(51) Int. Cl.: C01B 21/20, C01B 21/14

(54) **PURIFICATION OF HYDROXYLAMINE**
REINIGUNG VON HYDROXYLAMIN
PURIFICATION D'HYDROXYLAMINE

(30) Priority: 16.07.1997 US 895361
(43) Date of publication of application: 12.07.2000
(73) Proprietor: ASHLAND INC., Columbus, OH 43216 (US)
(72) Inventor: RIDDLE, Floyd, L., Emmaus, PA 18049 (GB); MICHELOTTI, Francis, W., Easton, PA 18042 (US)
(74) Representative: VOSSIUS & PARTNER
(86) International application number: PCT/US98/10445
(87) International publication number: WO 99/003780

(56) References cited:
- EP-A- 0 001 787
- EP-A- 0 236 993
- US-A- 4 147 623
- US-A- 5 318 762

## Description

The present invention relates to a method for the purification of hydroxylamine. More particularly, there is provided a method of purifying aqueous solutions of hydroxylamines by means of ion exchange.

Hydroxylamine has found many uses in a variety of industries. In the pharmaceutical industry and in connection with stripping compositions for photoresists it has found wide use. In both the pharmaceutical industry and for photoresist treatment it is important that the product is free of impurities such as anions and cations.

US-A-4,147,623 discloses the purification of hydroxylamine by ion exclusion which includes use of anion exchange resin in which hydroxylammonium salts are passed. The ion exchange resin is primarily utilized as a reaction source rather than for separation.

US-A-4,202,765 discloses the separation of hydroxylamine from a solution of hydroxylammonium salt through the use of a cation exchange resin. The process does not teach the exclusion of anions.

US-A-5,318,762 discloses treating solutions of hydroxylammonium salts containing excess acid by passing the solutions through a weak base ion exchange resin.

US-A-4,166,842 discloses a process of extracting hydroxylammonium ions from a solution utilizing a cation exchange resin which included the further step of converting the hydroxylammium ions to hydroxylamine.

None of the prior art teach the removal of cations and anions from hydroxylamine so as to produce a highly purified hydroxylamine.

It is therefore an object of the invention to provide hydroxylamine solutions which are substantially free of undesirable cations and anions.

It is another object of the invention to purify hydroxylamine through the use of ion exchange resins.

The present invention provides a method for the purification of hydroxylamine so that cations and anions which are normally present are greatly reduced. The process contains the steps which comprise:
A. Passing an aqueous solution of hydroxylamine through at least one macroporous or gel, strong acid ion exchange resin bed which has been created with a 5 to 20% hydrochloric acid solution, and then
B. Passing the solution from Step A through a strong base anion exchange resin bed.

Advantageously, there is utilized a plurality of cationic ion exchange resin beds and a plurality of anionic ion exchange beds.

According to the present invention, there is provided the purification of hydroxylamine whereby the resulting product is substantially free of undesirable cations and anions. The invention provides a process whereby an aqueous solution of hydroxylamine is passed through at least one bed of a cation strong acid ion exchange resin and at least one bed of a strong base anionic exchange resin. It is essential in the invention that the cationic exchange resin is pretreated with a 5 to 20% solution of hydrochloric acid. The hydrochloric acid treatment is preferably with a 5-10% hydrochloric acid solution.

The anionic strong base ion exchange resin is preferably treated with either a dilute potassium hydroxide or sodium hydroxide solution so as to remove any undesirable cations which may be present.

In accordance with the invention, it has been found that cation resins containing strong acid groups in the hydrogen form are capable of removing many of the undesirable trace metals. Also, using conventional methods of pretreatment such as with dilute sulfuric acid does not produce the same results as found when dilute hydrochloric acid has been used to pretreat or regenerate the ion exchange resin. It is preferred to also pretreat or regenerate the cationic exchange resin with a dilute solution of hydroxylamine such as a 5-20% solution, preferably, about 5-10% by weight solution of hydroxylamine before passing a 50% by weight solution of hydroxylamine through one or more beds of the ion exchange resins.

An exothermic reaction is present when the hydroxylamine solution is added to the ion exchange bed so that it is preferable to utilize a dilute hydroxylamine solution to condition the ion exchange resin. The 50% aqueous hydroxylamine solution which is utilized reacts with a strong base cation exchange resin to produce the corresponding amine salt accompanied by a strong exothermic reaction. Once the amine salt has been formed and the exotherm subsides, the Na⁺, K⁺ and other cations exchange in the resin bed satisfactorily.

The flow rate of the pretreatment with the 5-20%, preferably 5-10% by weight of hydroxylamine solution can be used to control the exotherm reaction which initially takes place.

Most commercial ion exchange resins, both anionic and cationic, require additional cleaning or regeneration to take place prior to use. If the cleaning or regeneration is not performed, excessive decomposition of hydroxylamine take place. In the situation where the Na/K⁺ values go down but the CA⁺² values go up, it has been found that regeneration of the cationic resin with dilute hydrochloric acid and the regeneration of the anionic resin with a base is required prior to use.

Both gel type and macroporous type of ion exchange resins can be used in the present process. Preferred are the polystyrene and polyacrylic acid strong acid hydrogen form cationic exchangers and the strong base anion exchangers of the polystyrene or polyacrylic type in the OH⁻ form.

The weak acid type cationic exchangers and the weak base anionic exchangers either alone or in combination with other exchangers have been found ineffective to reduce both the cationic and anionic trace materials found in the hydroxylamine compositions which are commercially produced.

The anion exchange resins which may be utilized in the present invention include the Purolite anion exchange resins A-600, A-400, A-300A-300E, A-400, A-850 and A-87, Rohm & Haas resins IRA-400, IRA-402, IRA-904 and IRA-93, Dow resins SBR, SAR, Dowex 66 and Dowex II, Ionac ASB-1, Duolite A-109 and the like in the OH⁻ form.

The cation exchange resins which may be utilized in the invention include Purolite resins CT-151, C-100, C-150, C-105 and NRW-100, Rohm & Haas resins IR-120, IR-122, 200, DP-1 and IRC-50, Dow resin MSC-1, Dowex 88 and CCR-2, Ionac resin CC and CNN, Duolite resin C-200, C-26, C-280 and the like in the H⁺ form.

The following examples are provided to further illustrate the present invention.

### Example 1

1. Into a 1 inch diameter glass column containing a stopcock was added 25ml of Purolite CT-151 cation exchange resin. The column was flushed with 1 liter of DI water. The resin was then flushed with 1000ml of 10% hydrochloric acid. The column was tested to determine if all undesirable cations are removed by inductively coupled plasma (ICP) analysis. The column was then flushed with DI water until the chloride ion level was < 0.5ppm. The column was then dried with nitrogen.
   A 5% hydroxylamine solution was poured through the column and there was an exothermic reaction. After the exotherm was complete a 50% hydroxylamine solution was passed through the column.
2. A glass column was prepared with Purolite anion exchange resin A-400 similar to Part I. 1000ml of 8% KOH was passed through the column until an inductively coupled plasma analysis indicated removal of metal anions, particularly FeCl₆⁻³. The column was then flushed with 2 liters of DI water until the K⁺ analysis by ICP was < 5ppb. The column was then dried with nitrogen and ready for use. The 50% hydroxylamine solution processed in Step 1 was then passed through the cation exchange resin.
   Preferably, the 50% hydroxylamine solution is passed through a plurality (about 5) of the prepared cation exchange beds and then through about 3 anion exchange beds.

The reduction of trace metals by use of the process of Example 1 is summarized as follows:

| | Before ion exchanged (ppb) | After ion exchanged (ppb) |
|---|---|---|
| Al | 536 | < 5 |
| Ca | 72 | < 5 |
| Cr | 70 | < 5 |
| Fe | 313 | < 5 |
| Mg | 15 | < 5 |

| | Before ion exchanged (ppb) | After ion exchanged (ppb) |
|---|---|---|
| Ni | 29 | 9 |
| K | 307 | < 5 |
| Si | 1687 | < 5 |
| Na | 183 | < 5 |

### Comparative Example 1

The process of Example 1 was followed except that in lieu of 10% HCl, there was used 10% H₂SO₄ in Step 1 to condition the resin.

The resulting hydroxylamine after passage through the anion exchange resin contained an unacceptable amount of trace cations.

### Comparative Example 2

The procedure of Example 1 was followed except that in Step 2 Purolite A-100 a polystyrene type weak base anion exchange resin was utilized.

The resulting hydroxylamine after passage through the anion exchange resin contained an unacceptable amount of trace anions.

### Comparative Example 3

The procedure of Example 2 was followed except that in Step 2 Purolite A-830 a weak base polyacrylic anion resin having a free base ionic form was utilized as the anion exchange resin.

The resulting hydroxylamine after passage through the anion exchange resin contained an unacceptable amount of trace anions.

## Claims

1. A method for the purification of hydroxylamine which comprises the steps of:
A. passing an aqueous solution of hydroxylamine through at least one macroporous or gel strong acid ion exchange resin bed which has been treated with a 5 to 20% hydrochloric acid solution, and then
B. passing the solution from Step A through at least one strong base anion exchange resin bed.

2. The method of claim 1 wherein said resin of Step A is a strong acid polystyrene resin.

3. The method of claim 1 wherein said resin of Step B comprises polystyrene cross-linked with divinylbenzene.

4. The method of claim 1 wherein said hydroxylamine solution comprises about 5 to 10% by weight of hydroxylamine.

5. The method of claim 4 including the subsequent step of passing a 50% by weight hydroxylamine solution.

6. The method of claim 1 wherein said hydroxylamine solution is passed through a plurality of resin beds in Step A.

7. The method of claim 2 wherein said hydroxylamine solution from Step A is passed through a plurality of resin beds in Step B.

8. A method for the purification of hydroxylamine which comprises the steps of:
a) forming a plurality of strong acid ion exchange beds;
b) forming a plurality of strong base ion exchange beds;
c) treating the strong acid ion exchange beds with a 5 to 20% hydrochloric acid solution;
d) treating the strong base ion exchange beds with a solution of sodium hydroxide or potassium hydroxide;
e) passing an aqueous solution containing about 5 to 20% by weight of hydroxylamine through said strong acid and strong base ion exchange beds; and then
f) passing an aqueous solution containing about 50% by weight of hydroxylamine through said strong acid and strong base ion exchange beds.

9. An aqueous hydroxylamine solution prepared by the method of any of claims 1 or 8.

## Patentansprüche

1. Verfahren zur Reinigung von Hydroxylamin, welches die Schritte umfasst:
A. Hindurchführen einer wässrigen Hydroxylaminlösung durch mindestens eine makroporöse oder gelierte, stark saure Ionenaustauscherharzschicht, welche mit einer 5 bis 20prozentigen Salzsäurelösung behandelt worden ist; und dann
B. Hindurchführen der Lösung aus Schritt A durch mindestens eine stark basische Anionenaustauscherharzschicht.

2. Verfahren gemäß Anspruch 1, wobei das Harz des Schrittes A ein stark saures Polystyrolharz ist.

3. Verfahren gemäß Anspruch 1, wobei das Harz des Schrittes B ein mit Divinylbenzol vernetztes Polystyrol umfasst.

4. Verfahren gemäß Anspruch 1, wobei die Hydroxylaminlösung etwa 5 bis 10 Gew.-% an Hydroxylamin umfasst.

5. Verfahren gemäß Anspruch 4, welches den nachfolgenden Schritt des Hindurchführens einer 50gewichtsprozentigen Hydroxylaminlösung einschließt.

6. Verfahren gemäß Anspruch 1, wobei die Hydroxylaminlösung in Schritt A durch eine Mehrzahl von Harzschichten hindurchgeführt wird.

7. Verfahren gemäß Anspruch 1, wobei die Hydroxylaminlösung aus Schritt A in Schritt B durch eine Mehrzahl von Harzschichten hindurchgeführt wird.

8. Verfahren zur Reinigung von Hydroxylamin, welches die Schritte umfasst:
a) Erzeugen einer Mehrzahl von stark sauren Ionenaustauscherschichten;
b) Erzeugen einer Mehrzahl von stark basischen Ionenaustauscherschichten;
c) Behandeln der stark sauren Ionenaustauscherschichten mit einer 5 bis 20prozentigen Salzsäurelösung;
d) Behandeln der stark basischen Ionenaustauscherschichten mit einer Natriumhydroxid- oder Kaliumhydroxidlösung;
e) Hindurchführen einer wässrigen Lösung, welche etwa 5 bis 20 Gew.-% an Hydroxylamin enthält, durch die stark sauren und stark basischen Ionenaustauscherschichten; und dann
f) Hindurchführen einer wässrigen Lösung, welche etwa 50 Gew.-% an Hydroxylamin enthält, durch die stark sauren und stark basischen Ionenaustauscherschichten.

9. Wässrige Hydroxylaminlösung, hergestellt durch das Verfahren gemäß einem der Ansprüche 1 oder 8.

## Revendications

1. Procédé pour la purification d'hydroxylamine qui comprend les étapes consistant à :
A. faire passer une solution aqueuse d'hydroxylamine sur au moins un lit de résine échangeuse d'ions à acide fort macroporeuse ou sous forme de gel qui a été traité avec une solution à 5 à 20 % d'acide chlorhydrique; et ensuite
B. faire passer la solution en provenance de l'étape A sur au moins un lit de résine échangeuse d'anions à base forte.

2. Procédé de la revendication 1 dans lequel ladite résine de l'étape A est une résine en polystyrène à acide fort.

3. Procédé de la revendication 1 dans lequel ladite résine de l'étape B comprend du polystyrène réticulé avec du divinylbenzène.

4. Procédé de la revendication 1 dans lequel ladite solution d'hydroxylamine comprend environ 5 à 10 % en poids d'hydroxylamine.

5. Procédé de la revendication 4 comprenant l'étape subséquente consistant à faire passer une solution à 50 % en poids d'hydroxylamine.

6. Procédé de la revendication 1 dans lequel on fait passer ladite solution d'hydroxylamine sur plusieurs lits de résine au cours de l'étape A.

7. Procédé de la revendication 1 dans lequel on fait passer ladite solution d'hydroxylamine en provenance de l'étape A sur plusieurs lits de résine au cours de l'étape B.

8. Procédé pour la purification d'hydroxylamine qui comprend les étapes consistant à :
a) former plusieurs lits échangeurs d'ions à acide fort ;
b) former plusieurs lits échangeurs d'ions à base forte ;
c) traiter les lits échangeurs d'ions à acide fort avec une solution à 5 à 20 % d'acide chlorhydrique ;
d) traiter les lits échangeurs d'ions à base forte avec une solution d'hydroxyde de sodium ou d'hydroxyde de potassium ;
e) faire passer une solution aqueuse contenant environ 5 à 20 % en poids d'hydroxylamine sur lesdits lits échangeurs d'ions à acide fort et à base forte ; et ensuite
f) faire passer une solution aqueuse contenant environ 50 % en poids d'hydroxylamine sur lesdits lits échangeurs d'ions à acide fort et à base forte.

9. Solution aqueuse d'hydroxylamine préparée par le procédé de l'une quelconque des revendications 1 ou 8.
